# FASCICULE DE BREVET EUROPEEN

(11) **EP 3 795 368 B1**
(45) Date de publication et mention de la délivrance du brevet: **24.08.2022**
(21) Numéro de dépôt: 20197568.7
(22) Date de dépôt: 22.09.2020
(51) Int. Cl.: B60B 3/16, B60B 27/00, F16D 65/12

(54) **MONTAGE D'UNE JANTE DE ROUE DE VÉHICULE AUTOMOBILE ET D'UN DISQUE DE FREIN SUR UN SYSTÈME DE GUIDAGE EN ROTATION**
MONTAGE EINER RADFELGE EINES KRAFTFAHRZEUGS UND EINER BREMSSCHEIBE AUF EINEM DREHFÜHRUNGSSYSTEM
ASSEMBLY OF A WHEEL RIM OF A MOTOR VEHICLE AND A BRAKE DISC ON A ROTATING GUIDING SYSTEM

(30) Priorité: 23.09.2019 FR 1910466
(43) Date de publication de la demande: 24.03.2021
(73) Titulaire: NTN-SNR ROULEMENTS, 74000 Annecy (FR)
(72) Inventeur: MARTINEZ, Solène, 73100 Gresy sur Aix (FR); MINEUR, Axel, 74010 Annecy Cedex (FR); POURROY-SOLARI, Vincent, 74230 THONES (FR)
(74) Mandataire: Sayettat, Julien Christian

(56) Documents cités:
- EP-A1- 0 834 670
- EP-B1- 0 834 670
- WO-A1-2010/027896
- WO-A1-2018/134384

## Description

L'invention concerne un montage comprenant une jante de roue de véhicule automobile et un disque de frein montés sur un système de guidage en rotation.

Le système de guidage comprend un moyeu destiné à être monté en rotation par rapport à un organe fixe par l'intermédiaire d'au moins une rangée de corps roulants, le moyeu étant pourvu de moyens d'association de l'ensemble jante / disque et l'organe fixe étant pourvu de moyens d'association à un élément de suspension du véhicule.

Selon une réalisation, le moyeu présente un fût depuis lequel s'étend radialement une bride pourvue d'interfaces de fixation de la jante et du disque de frein, par exemple sous la forme d'orifices de fixation par vissage, ladite bride étant agencée pour transmettre les efforts de roulage et supporter les efforts de freinage, notamment relativement à la transmission à la jante des efforts de freinage exercés par le disque.

Pour réduire la masse tout en résistant à ces efforts, le document WO2018134384 propose une bride de fixation formée d'une pluralité de pattes qui sont espacées angulairement par des évidements, lesdites pattes présentant chacune un orifice de fixation de la jante et un orifice de fixation du disque de frein au moyen de vis permettant d'exercer un effort de serrage axial de respectivement la jante et le disque sur les pattes.

En outre, les pattes peuvent intégrer la géométrie d'un manchon de fixation du disque de frein, notamment en décalant radialement et axialement les orifices de fixation du disque par rapport aux orifices de fixation de la jante. Cette réalisation permet notamment l'utilisation d'un disque présentant une géométrie de couronne afin de diminuer le poids du montage mais également de limiter le bruit et d'améliorer la robustesse ainsi que la compacité axiale de la liaison moyeu / disque.

Toutefois, un tel montage conduit à serrer la jante au moyen des vis sur des parois discrètes formées sur les pattes, ce qui réduit leur surface de frottement par rapport à une surface annulaire continue, et donc induit un risque de glissement relatif.

En particulier, en cas de freinage, l'effort transmis au moyeu par le disque peut conduire à un glissement relatif entre ledit moyeu et la jante, ledit glissement venant contraindre en cisaillement les vis de serrage avec un risque de casse.

L'invention vise à perfectionner l'art antérieur en proposant notamment un montage comprenant une jante de roue de véhicule automobile et un disque de frein qui sont montés sur un moyeu de guidage en rotation présentant des pattes, dans lequel l'immobilisation en rotation de la jante sur lesdites pattes est fiabilisée afin de limiter leur glissement relatif, notamment induit par les efforts de freinage.

A cet effet, l'invention propose un montage comprenant une jante de roue de véhicule automobile et un disque de frein montés sur un système de guidage en rotation comprenant un moyeu destiné à être monté en rotation autour d'un axe par rapport à un organe fixe, ledit moyeu présentant un fût depuis lequel s'étend radialement une bride de fixation de ladite jante et dudit disque de frein, ladite bride étant formée d'une pluralité de pattes qui sont espacées angulairement par des évidements, lesdites pattes présentant chacune une interface de fixation de la jante et une interface de fixation du disque de frein définissant respectivement un diamètre de fixation de la jante et un diamètre de fixation du disque de frein autour de l'axe de rotation, ledit diamètre de fixation du disque de frein étant supérieur audit diamètre de fixation de la jante, les pattes présentant des parois latérales qui sont en regard circonférentiel avec respectivement des parois complémentaires de la jante de sorte à pouvoir immobiliser en rotation ladite jante sur lesdites pattes.

D'autres objets et avantages de l'invention apparaîtront dans la description qui suit, faite en référence aux figures annexées, dans lesquelles :
[Fig.1a],
[Fig.1b],
[Fig.1c], et
[Fig.1d] sont des représentations d'un montage selon un mode de réalisation de l'invention, respectivement en perspective en vue interne (figure 1a) et de côté (figure 1b), en coupe longitudinale (figure 1c) et transversale (figure 1d) ;
[Fig.2] et
[Fig.3] sont des représentations en perspective en vue interne respectivement du moyeu (figure 2) et de la jante de roue (figure 3) du montage des figures 1a, 1b, 1c et 1d.

En relation avec ces figures, on décrit ci-dessous un montage comprenant une jante 1 de roue de véhicule automobile et un disque de frein 2 montés sur un système de guidage en rotation de l'ensemble jante 1 / disque 2.

Le système comprend un moyeu 3 destiné à être monté en rotation autour d'un axe X par rapport à un organe fixe par l'intermédiaire d'au moins une rangée de corps roulants. Dans la description, les termes « extérieur » et « intérieur » sont définis par rapport à l'axe X d'entrainement en rotation, respectivement pour une localisation éloignée et proche dudit axe.

Le moyeu 3 présente un fût 4 qui comprend une paroi extérieure 4a sur laquelle peut être disposée au moins une piste de roulement pour former, avec une piste de roulement portée par l'organe fixe, un chemin pour une rangée de corps coulants tels que décrit précédemment. En particulier, une telle piste de roulement peut être formée directement sur la paroi extérieure 4a, ou sur une bague qui est rapportée sur ladite paroi extérieure, puis immobilisée axialement du côté interne par une collerette 5 qui peut être réalisée par sertissage.

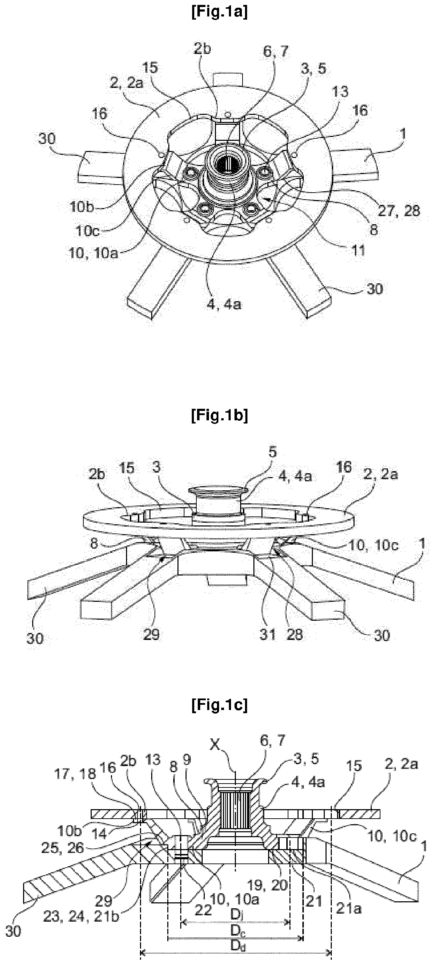

Dans la description, les termes « externe » et « interne » sont définis par rapport à l'intérieur du véhicule automobile pour désigner une position respectivement éloignée et proche dudit intérieur, et notamment proche respectivement du bas et du haut de la figure 1c. Par ailleurs, les termes « radial » et « axial » sont définis par rapport à l'axe X d'entrainement en rotation, respectivement perpendiculairement et suivant cet axe.

Pour permettre l'entraînement en rotation de la roue, notamment dans le cas d'une roue motrice, le système peut comprendre un bol de transmission d'un couple moteur au moyeu, ledit bol étant actionné en rotation par le moteur du véhicule et comprenant notamment un joint homocinétique (CVJ) par exemple de type Rzeppa.

Pour assurer la transmission du couple de rotation entre le bol et le moyeu 3, le système comprend des moyens d'engrènement 7 qui sont formés réciproquement dans un alésage 6 du fût 4 et sur un embout du bol. En particulier, l'embout et l'alésage 6 peuvent présenter une géométrie cylindrique complémentaire, les moyens d'engrènement comprenant deux ensembles 7 de cannelures axiales formés respectivement dans ledit alésage et sur ledit embout pour être engagés l'un dans l'autre lorsque ledit embout est monté dans ledit alésage.

Le moyeu 3 présente en outre une bride 8 de fixation de la jante 1 et du disque de frein 2, ladite bride s'étendant radialement depuis le fût 4. En particulier, comme représenté notamment sur la figure 1c, la bride de fixation 8 s'étend depuis une zone périphérique externe 9 du fût 4.

La bride 8 est formée d'une pluralité de pattes 10 qui sont espacées angulairement par des évidements 11. Le fait de prévoir une bride 8 avec une structure circonférentielle discontinue permet de réduire de façon importante le poids du moyeu 3, et donc le poids total du montage.

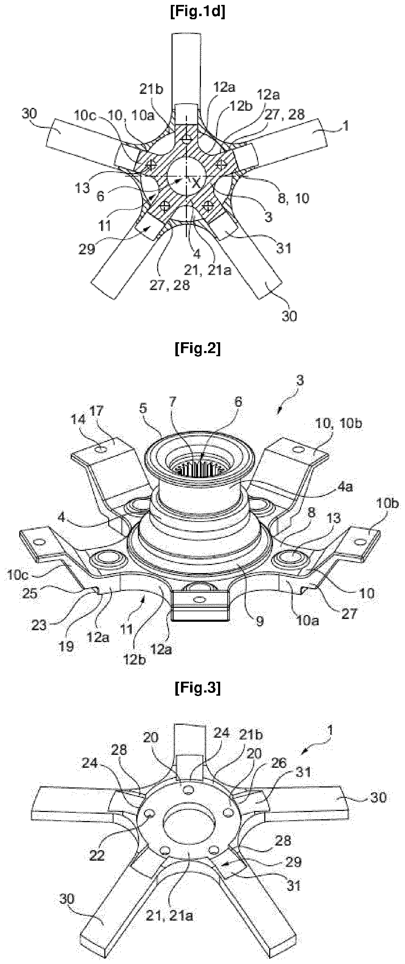

En relation avec les figures 1d et 2, chaque patte 10 présente deux parois latérales 12a qui sont chacune raccordées à une paroi latérale 12a d'une patte 10 adjacente par une paroi concave radiale 12b formée dans la bride 8, ladite paroi concave délimitant avec lesdites parois latérales les évidements 11 entre lesdites pattes adjacentes. Dans le mode de réalisation représenté, la bride 8 présente cinq pattes de fixation 10 qui sont équiréparties angulairement autour de l'axe de rotation X.

Pour permettre la fixation de la jante 1 et du disque 2 sur la bride 8, les pattes 10 présentent chacune une interface pour la fixation de ladite jante et une interface pour la fixation dudit disque. Dans le mode de réalisation représenté, chacune des interfaces comprend un orifice 13, 14 de fixation dans lesquels des vis, des goujons ou des ensembles écrous / tiges filetées (non représentés) sont destinés à venir s'engager pour fixer respectivement la jante 1 et le disque de frein 2 par serrage axial sur les pattes 10.

Les interfaces de fixation de la jante 1 et du disque de frein 2 définissent respectivement un diamètre Dj de fixation de la jante 1 et un diamètre D_{d} de fixation du disque de frein 2 autour de l'axe X, le diamètre D_{d} de fixation du disque de frein 2 étant supérieur au diamètre Dj de fixation de la jante 1. Dans le mode de réalisation représenté, les orifices 13, 14 de fixation sont centrés sur les diamètres respectifs.

En particulier, chacune des pattes 10 présente, par rapport au fût 4, une partie proximale 10a sur laquelle est formé une interface comprenant un orifice 13 de fixation de la jante 1 et une partie distale 10b sur laquelle est formé une interface comprenant un orifice 14 de fixation du disque de frein 2, les parties 10a, 10b étant reliées par une partie de raccordement 10c qui est agencée pour décaler axialement et radialement lesdites parties proximale et distale l'une par rapport à l'autre. De façon avantageuse, la partie de raccordement 10c est inclinée par rapport à la direction axiale en présentant deux extrémités coudées de raccordement avec respectivement une partie proximale 10a et une partie distale 10b s'étendant radialement.

En relation avec les figures 1a, 1b, et 1c, le disque de frein 2 comprend une couronne de friction 2a présentant un bord intérieur 15 depuis lequel s'étendent des lobes 2b pourvus chacun d'un orifice 16 de fixation, les lobes 2b étant formés dans la continuité radiale du bord intérieur 15. Un tel agencement du disque de frein 2 et du moyeu 3 permet de limiter les bruits issus de leur fixation. D'autres modes de fixation du disque de frein 2 sur l'interface des pattes 10 sont possibles, par exemple en emprisonnant l'extrémité desdites pattes dans des encoches dudit disque, encoches refermées par une plaque ou une couronne fixée par des vis dans ledit disque. Ce type de montage permet de réduire les déformations des pattes 10 liées à la dilatation.

Pour assurer le montage du disque de frein 2 sur le moyeu 3, chaque lobe 2b est disposé en appui axial sur respectivement une partie distale 10b d'une patte 10 en alignant axialement leurs orifices 14, 16 de fixation respectifs. Ensuite, une vis est engagée dans chaque ensemble d'orifices 14, 16.

Par ailleurs, les parois distales 10b présentent chacune une paroi radiale interne 17 sur laquelle une paroi complémentaire 18 du disque de frein 2 est en appui axial. Dans le mode de réalisation représenté, les parois complémentaires 18 sont formées chacune sur une paroi radiale externe d'un lobe 2b, les parois radiales 17, 18 s'étendant chacune autour de l'orifice de fixation 14, 16 de respectivement une partie distale 10b et un lobe 2b.

En particulier, les parois radiales internes 17 sont disposées autour du fût 4, ce qui permet de disposer la fonction d'engrènement du moyeu 3 sensiblement au même niveau axial que la fonction de fixation du disque de frein 2. Ainsi, il est possible de réduire l'encombrement axial de ces fonctions, et donc l'encombrement axial global du montage.

Pour permettre la fixation de la jante 1 sur le moyeu 3, les parties proximales 10a présentent chacune une paroi radiale externe 19 sur laquelle une paroi complémentaire 20 de ladite jante est en appui axial. De façon avantageuse, le fait que le disque de frein 2 soit fixé sur des parois 17 qui sont distinctes des parois 19 de fixation de la jante 1 permet de diminuer les exigences de battement sur les parois 19, et donc d'en faciliter leur réalisation.

En relation avec les figures 1a, 1d et 3, la jante 1 présente un plateau central 21 dans lequel des orifices 22 de fixation au moyeu 1 sont formés, ledit plateau présentant une paroi annulaire radiale 21a sur laquelle les parois complémentaires 20 sont formées en entourant chacune respectivement un orifice 22.

De façon avantageuse, les parois radiales externes 19 du moyeu 3 sont disposées en saillie externe du fût 4, ce qui permet de faciliter la fixation sur elles de la jante 1. Pour ce faire, chacune des parties proximales 10a est raccordée au fût 4 de sorte à être décalée du côté externe dudit fût 4, notamment grâce à un agencement particulier de la zone périphérique externe 9 depuis laquelle s'étend la bride 8.

Chacune des pattes 10 présente une paroi 23 définissant entre elles un diamètre D_{c} autour de l'axe de rotation X, la jante 1 présentant des parois complémentaires 24 qui sont montées sur lesdites parois pour assurer le centrage de ladite jante suivant le diamètre D_{c}.

De façon avantageuse, le diamètre D_{c} de centrage de la jante 1 est compris entre le diamètre D_{d} de fixation du disque de frein 2 et le diamètre Dj de fixation de la jante 1, ce qui permet de limiter l'encombrement axial de la fonction de centrage de ladite jante.

Dans le mode de réalisation représenté, les parois de centrage 23 sont formées au niveau des parties de raccordement 10c. En particulier, chaque paroi de centrage 23 d'une patte 10 est formée sur l'extrémité externe d'une partie de raccordement 10c, de manière à être disposée dans le prolongement extérieur de la paroi radiale externe 19. Ainsi, on rapproche axialement et radialement les fonctions de fixation et de centrage de la jante 1, ce qui permet de limiter l'encombrement global du montage.

Les pattes 10 présentent chacune un épaulement formé d'une paroi radiale 25 et d'une paroi axiale 23 de centrage, la jante 1 présentant un épaulement complémentaire dont la paroi radiale 26 est en regard axial de la paroi radiale 25 de ladite patte et dont la paroi axiale 24 est centrée sur la paroi axiale 23 de ladite patte.

Dans le mode de réalisation représenté, la périphérie du plateau central 21 est équipée d'un rebord annulaire 21b qui s'étend axialement, et sur lequel sont formées les parois complémentaires 24 de centrage.

Pour limiter les risques de déplacement relatif entre la jante 1 et le moyeu 3 durant la rotation, notamment durant les phases de freinage, et donc les risques d'endommagement du montage, notamment au niveau des vis de fixation de ladite jante, les pattes 10 présentent en outre des parois latérales 27 qui sont en regard circonférentiel avec respectivement des parois complémentaires 28 de la jante 1 de sorte à pouvoir immobiliser en rotation ladite jante sur lesdites pattes, notamment en prévoyant un jeu circonférentiel juste suffisant à la disposition de la jante 1 sur les pattes 10.

Dans le mode de réalisation représenté, les parois latérales 27 sont formées au niveau des parties de raccordement 10c, et notamment sur les extrémités intérieures desdits parties. En particulier, les fonctions de centrage et d'immobilisation en rotation de la jante 1 sont ainsi réalisées sensiblement au même endroit, ce qui permet non seulement de simplifier la réalisation du montage, mais également de réduire l'encombrement global dudit montage.

Toutefois, ces deux fonctions sont indépendantes l'une de l'autre, et peuvent être réalisées en deux endroits différents du montage, suivant des variantes de réalisation non représentées.

Pour permettre son immobilisation en rotation sur le moyeu 3, la jante 1 présente au moins un logement 29 dans lequel une patte 10 est disposée, les parois complémentaires 28 bordant latéralement ledit logement. Dans le mode de réalisation représenté, un logement 29 est prévu pour chacune des pattes 10.

En relation avec les figures, la périphérie du plateau central 21 est prolongée radialement par des branches 30 de la jante 1, un logement 29 étant formé sur respectivement chacune desdites branches. En particulier, chaque logement 29 débouche intérieurement dans le rebord annulaire 21b et comprend un fond 31 sur l'extrémité intérieure duquel est formée la paroi radiale complémentaire 26, afin de former, avec la paroi axiale 24 en regard, l'épaulement complémentaire de centrage de la jante 1.

De façon avantageuse, une branche 30 est formée dans le prolongement radial de chacun des orifices 22 du plateau central 21, de manière à disposer chaque logement 29 en regard radial de respectivement un orifice 22. Un tel agencement permet de faciliter l'alignement des orifices 13, 22 pour la fixation de la jante 1, mais également de localiser les efforts d'immobilisation en rotation de ladite jante au niveau desdits orifices, afin de mieux protéger les vis contre les risques d'endommagement.

## Revendications

1. Montage comprenant une jante (1) de roue de véhicule automobile et un disque de frein (2) montés sur un système de guidage en rotation comprenant un moyeu (3) destiné à être monté en rotation autour d'un axe (X) par rapport à un organe fixe, ledit moyeu présentant un fût (4) depuis lequel s'étend radialement une bride (8) de fixation de ladite jante et dudit disque de frein, ladite bride étant formée d'une pluralité de pattes (10) qui sont espacées angulairement par des évidements (11), lesdites pattes présentant chacune une interface de fixation de la jante (1) et une interface de fixation du disque de frein (2) définissant respectivement un diamètre (Dⱼ) de fixation de la jante (1) et un diamètre (D_{d}) de fixation du disque de frein (2) autour de l'axe de rotation (X), ledit diamètre de fixation du disque de frein (2) étant supérieur audit diamètre de fixation de la jante (1), ledit montage étant **caractérisé en ce que** les pattes (10) présentent des parois latérales (27) qui sont en regard circonférentiel avec respectivement des parois complémentaires (28) de la jante (1) de sorte à pouvoir immobiliser en rotation ladite jante sur lesdites pattes.

2. Montage selon la revendication 1, **caractérisé en ce que** la jante (1) présente au moins un logement (29) dans lequel une patte (10) est disposée, les parois complémentaires (28) bordant latéralement ledit logement.

3. Montage selon la revendication 2, **caractérisé en ce que** la jante (1) présente un plateau central (21) dans lequel des orifices de fixation (22) sont formés, la périphérie du plateau (21) étant prolongée radialement par des branches (30) de la jante (1), un logement (29) étant formé sur respectivement chacune desdites branches.

4. Montage selon l'une quelconque des revendications 1 à 3, **caractérisé en ce que** chacune des pattes (10) présente, par rapport au fût (4), une partie proximale (10a) sur laquelle est formé l'interface de fixation de la jante (1) et une partie distale (10b) sur laquelle est formé l'interface de fixation du disque de frein (2), lesdites parties étant reliées par une partie de raccordement (10c) qui est agencée pour décaler axialement et radialement lesdites parties l'une par rapport à l'autre.

5. Montage selon la revendication 4, **caractérisé en ce que** les parois latérales (27) sont formées au niveau des parties de raccordement (10c).

6. Montage selon l'une quelconque des revendications 1 à 5, **caractérisé en ce que** chacune des pattes (10) présente une paroi (23) définissant entre elles un diamètre (D_{c}) autour de l'axe de rotation (X) et **en ce que** la jante (1) présente des parois complémentaires (24) qui sont montées sur lesdites parois pour assurer le centrage de ladite jante suivant le diamètre (D_{c}).

7. Montage selon la revendication 6 lorsqu'elle dépend de la revendication 4, **caractérisé en ce que** les parois de centrage (23) sont formées au niveau des parties de raccordement (10c).

8. Montage selon l'une des revendications 6 ou 7, **caractérisé en ce que** le diamètre (D_{c}) de centrage de la jante (1) est compris entre le diamètre (D_{d}) de fixation du disque de frein (2) et le diamètre (Dⱼ) de fixation de ladite jante.

9. Montage selon l'une quelconque des revendications 4 à 8, **caractérisé en ce que** les parties proximales (10a) présentent chacune une paroi radiale externe (19) sur laquelle une paroi complémentaire (20) de la jante (1) est en appui axial.

10. Montage selon l'une quelconque des revendications 4 à 9, **caractérisé en ce que** les parties distales (10b) présentent chacune une paroi radiale interne (17) sur laquelle une paroi complémentaire (18) du disque de frein (2) est en appui axial.

11. Montage selon l'une quelconque des revendications 1 à 10, **caractérisé en ce qu'**il comprend des vis, des goujons ou des ensembles écrous / tiges filetées engagés dans respectivement un orifice (13, 14) de fixation pour fixer respectivement la jante (1) et le disque de frein (2) par serrage axial sur les pattes (10).

12. Montage selon l'une quelconque des revendications 1 à 11, **caractérisé en ce que** le disque de frein (2) comprend une couronne de friction (2a) présentant un bord intérieur (15) depuis lequel s'étendent des lobes (2b) pourvus chacun d'un orifice de fixation (16), lesdits lobes étant formés dans la continuité radiale dudit bord intérieur

## Patentansprüche

1. Montage, umfassend eine Felge (1) eines Rades eines Kraftfahrzeugs, und eine Bremsscheibe (2), die auf einem Drehführungssystem montiert sind, das eine Nabe (3) umfasst, die dazu bestimmt ist, um eine Achse (X) in Bezug auf ein feststehendes Organ drehend montiert zu werden, wobei die Nabe einen Schaft (4) aufweist, aus dem sich radial ein Flansch (8) zur Befestigung der Felge und der Bremsscheibe erstreckt, wobei der Flansch aus einer Vielzahl von Laschen (10) gebildet wird, die winkelig durch Aussparungen (11) beabstandet sind, wobei die Laschen jeweils eine Befestigungsschnittstelle für die Felge (1) und eine Befestigungsschnittstelle für die Bremsscheibe (2) aufweisen, die jeweils einen Durchmesser (Dⱼ) zum Befestigen der Felge (1) und einen Durchmesser (D_{d}) zum Befestigen der Bremsscheibe (2) um die Drehachse (X) herum definieren, wobei der Durchmesser zum Befestigen der Bremsscheibe (2) größer ist, als der Durchmesser zum Befestigen der Felge (1), wobei die Montage **dadurch gekennzeichnet ist, dass** die Laschen (10) Seitenwände (27) aufweisen, die umfänglich gegenüber jeweils von ergänzenden Wänden (28) der Felge (1) sind, um die Felge auf den Laschen gegen Drehung blockieren zu können.

2. Montage nach Anspruch 1, **dadurch gekennzeichnet, dass** die Felge (1) mindestens eine Aufnahme (29) aufweist, in der eine Lasche (10) angeordnet ist, wobei die ergänzenden Wände (28) die Aufnahme seitlich einfassen.

3. Montage nach Anspruch 2, **dadurch gekennzeichnet, dass** die Felge (1) eine zentrale Scheibe (21) aufweist, in der Befestigungsöffnungen (22) gebildet sind, wobei die Peripherie der Scheibe (21) radial durch Äste (30) der Felge (1) verlängert ist, wobei eine Aufnahme (29) auf jeweils einem der Äste gebildet wird.

4. Montage nach einem der Ansprüche 1 bis 3, **dadurch gekennzeichnet, dass** jede der Laschen (10) in Bezug auf den Schaft (4) einen proximalen Teil (10a) aufweist, auf dem die Befestigungsschnittstelle für die Felge (1) gebildet ist, und einen distalen Teil (10b), auf dem die Befestigungsschnittstelle für die Bremsscheibe (2) gebildet ist, wobei die Teile durch einen Anschlussteil (10c) verbunden sind, der angeordnet ist, um die Teile zueinander axial und radial zu versetzen.

5. Montage nach Anspruch 4, **dadurch gekennzeichnet, dass** die Seitenwände (27) im Bereich der Anschlussteile (10c) gebildet sind.

6. Montage nach einem der Ansprüche 1 bis 5, **dadurch gekennzeichnet, dass** jede der Laschen (10) eine Wand (23) aufweist, die zwischen sich einen Durchmesser (D_{c}) um die Drehachse (X) herum definieren, und dadurch, dass die Felge (1) ergänzende Wände (24) aufweist, die auf den Wänden montiert sind, um für die Zentrierung der Felge entlang des Durchmessers (D_{c}) zu sorgen.

7. Montage nach Anspruch 6, wenn er von Anspruch 4 abhängig ist, **dadurch gekennzeichnet, dass** die Zentrierwände (23) im Bereich der Anschlussteile (10c) gebildet sind.

8. Montage nach einem der Ansprüche 6 oder 7, **dadurch gekennzeichnet, dass** der Durchmesser (D_{c}) zum Zentrieren der Felge (1) zwischen dem Durchmesser (D_{d}) zum Befestigen der Bremsscheibe (2) und dem Durchmesser (Dⱼ) zum Befestigen der Felge liegt.

9. Montage nach einem der Ansprüche 4 bis 8, **dadurch gekennzeichnet, dass** die proximalen Teile (10a) jeweils eine radiale Außenwand (19) aufweisen, auf der eine ergänzende Wand (20) der Felge (1) axial aufliegt.

10. Montage nach einem der Ansprüche 4 bis 9, **dadurch gekennzeichnet, dass** die distalen Teile (10b) jeweils eine radiale Innenwand (17) aufweisen, auf der eine ergänzende Wand (18) der Bremsscheibe (2) axial aufliegt.

11. Montage nach einem der Ansprüche 1 bis 10, **dadurch gekennzeichnet, dass** sie Schrauben, Bolzen, oder Einheiten aus Muttern/Gewindestiften umfasst, die in jeweils eine Befestigungsöffnung (13, 14) eingeführt werden, um jeweils die Felge (1) und die Bremsscheibe (2) durch axiales Spannen an den Laschen (10) zu befestigen.

12. Montage nach einem der Ansprüche 1 bis 11, **dadurch gekennzeichnet, dass** die Bremsscheibe (2) einen Reibungskranz (2a) umfasst, der einen Innenrand (15) aufweist, aus dem sich Lappen (2b) erstrecken, die jeweils mit einer Befestigungsöffnung (16) versehen sind, wobei die Lappen in der radialen Fortsetzung des Innenrandes gebildet sind.

## Claims

1. Assembly comprising a wheel rim (1) of a motor vehicle and a brake disc (2) assembled on a rotating guiding system comprising a hub (3) intended to be assembled in rotation around and axis (X) with respect to a fixed member, said hub having a shaft (4) from which radially extends a mounting flange (8) of said rim and of said brake disc, said flange being formed from a plurality of tabs (10) which are angularly spaced by recesses (11), said tabs each have a mounting interface of the rim (1) and a mounting interface of the brake disc (2) defining respectively a mounting diameter (Dⱼ) of the rim (1) and a mounting diameter (D_{d}) of the brake disc (2) about the axis of rotation (X), said mounting diameter of the brake disc (2) being greater than said mounting diameter of the rim (1), said assembly being **characterised in that** the tabs (10) have side walls (27) which are circumferentially facing with respectively additional walls (28) of the rim (1) in such a way as to be able to immobilise said rim in rotation on said tabs.

2. Assembly according to claim 1, **characterised in that** the rim (1) has at least one housing (29) wherein a tab (10) is disposed, the additional walls (28) laterally bordering said housing.

3. Assembly according to claim 2, **characterised in that** the rim (1) has a central plateau (21) wherein mounting orifices (22) are formed, the periphery of the plateau (21) being radially extended by branches (30) of the rim (1), a housing (29) being formed on respectively each one of said branches.

4. Assembly according to any of claims 1 to 3, **characterised in that** each one of the tabs (10) has, with respect to the shaft (4), a proximal portion (10a) on which is formed the mounting interface of the rim (1) and a distal portion (10b) on which is formed the mounting interface of the brake disc (2), said portions being connected by a connection portion (10c) which is arranged to axially and radially offset said portions from one another.

5. Assembly according to claim 4, **characterised in that** the side walls (27) are formed at the connection portions (10c) .

6. Assembly according to any of claims 1 to 5, **characterised in that** each one of the tabs (10) has a wall (23) defining between them a diameter (D_{c}) about the axis of rotation (X) and **in that** the rim (1) has additional walls (24) that are assembled on said walls to provide the centring of said rim according to the diameter (D_{c}).

7. Assembly according to claim 6 when it depends on claim 4, **characterised in that** the centring walls (23) are formed at the connection portions (10c).

8. Assembly according to one of claims 6 or 7, **characterised in that** the centring diameter (D_{c}) of the rim (1) is comprised between the mounting diameter (D_{d}) of the brake disc (2) and the mounting diameter (Dⱼ) of said rim.

9. Assembly according to any of claims 4 to 8, **characterised in that** the proximal portions (10a) each have an external radial wall (19) on which an additional wall (20) of the rim (1) is in axial bearing.

10. Assembly according to any of claims 4 to 9, **characterised in that** the distal portions (10b) each have an internal radial wall (17) on which an additional wall (18) of the brake disc (2) is in axial bearing.

11. Assembly according to any of claims 1 to 10, **characterised in that** it comprises screws, studs or nut/threaded rod assemblies engaged in respectively a mounting orifice (13, 14) to respectively mount the rim (1) and the brake disc (2) by axial tightening on the tabs (10) .

12. Assembly according to any of claims 1 to 11, **characterised in that** the brake disc (2) comprises a friction crown (2a) having an inner edge (15) from which lobes (2b) extend each provided with a mounting orifice (16), said lobes being formed in the radial continuity of said inner edge.
